# FASCICULE DE BREVET EUROPEEN

(11) **EP 0 586 728 B1**
(45) Date de publication et mention de la délivrance du brevet: **27.12.1996**
(21) Numéro de dépôt: 92115382.1
(22) Date de dépôt: 09.09.1992
(51) Int. Cl.: B65G 53/46

(54) **Distributeur rotatif**
Zellenradschleuse
Rotary valve

(43) Date de publication de la demande: 16.03.1994
(73) Titulaire: SOCIETE DES PRODUITS NESTLE S.A., 1800 Vevey (CH)
(72) Inventeur: Torchard, Michel, F-95340 Persan (FR)
(74) Mandataire: Vuille, Roman

(56) Documents cités:
- EP-A- 0 124 345
- DE-A- 3 145 781
- LU-A- 47 556
- US-A- 2 399 472
- US-A- 2 538 320

## Description

La présente invention se rapporte à un dispositif d'alimentation ou de déchargement, notamment en continu, de produits pulvérulents, et concerne plus particulièrement un distributeur rotatif présentant une étanchéité améliorée.

Le brevet FR 2.012.300 décrit un distributeur à goulotte pour l'alimentation et le déchargement de produits finement divisés dans un réservoir.
Le distributeur rotatif décrit comprend un rotor formé avec au moins une alvéole et supporté par des moyens de rotation, tels que des tourillons, montés sur un carter pourvu de manchons tubulaires d'alimentation et de déchargement du produit, chaque alvéole étant disposée de manière à être en communication, pendant que le rotor tourne, avec lesdits manchons d'alimentation et de déchargement.
L'étanchéité de l'intérieur du distributeur à l'atmosphère extérieure est obtenue par l'intermédiaire de manchons d'alimentation et de déchargement fixes, ainsi que par l'intermédiaire d'au moins un presse-étoupe.

Le préambule de la revendication se base sur l'état de la technique tel que connu par le document US-A-2 399 472.

Un but de la présente invention est la réalisation d'un distributeur rotatif, en mettant en oeuvre un nouveau principe d'étanchéité qui permet de faciliter et d'améliorer l'étanchéité dudit distributeur à l'atmosphère extérieure.

La solution technique réalisée par l'invention est indiquée dans la seconde partie de la revendication 1.

Selon un mode de réalisation particulier, le distributeur rotatif comprend deux éléments d'étanchéité constitués chacun d'une bague d'usure annulaire, dont la face en appui contre le manchon d'alimentation ou de déchargement est plane, et dont la face en frottement permanent sur le rotor est de forme semi-cylindrique dans le sens de l'axe de rotation du rotor.

Un avantage du distributeur selon la présente invention est d'assurer une étanchéité parfaite avec l'extérieur et donc de permettre un isolement constant des produits pulvérulents à l'atmosphère extérieure, ce, dès leur introduction dans le réservoir jusqu'à leur déchargement.
Un autre avantage est de permettre l'introduction et le déchargement des produits pulvérulents sans pression différentielle importante (3-10 bars), dans des installations travaillant sous une pression de 6-7 bars ou sous une pression de vapeur à température élevée, de l'ordre de 200°C, ceci avec un taux de fuite très faible.
Un autre avantage est que le distributeur est facilement démontable, ce qui peut faciliter sa maintenance.
Un autre avantage est la possibilité de régler la force du frottement de chacun des éléments d'étanchéité sur le rotor en fonction de la pression de service.

Le distributeur rotatif selon la présente invention est plus particulièrement utilisable dans le cadre d'applications alimentaires, par exemple applicable à des granulés ou des produits pulvérulents.

D'autres caractéristiques et avantages ressortiront de la description qui suit, faite en référence aux dessins annexés, donnés uniquement à titre d'exemples non limitatifs, et parmi lesquels :
- la figure 1 représente une vue de face en coupe longitudinale du distributeur rotatif selon l'invention,
- la figure 2 représente une vue de coté en coupe du distributeur rotatif, et

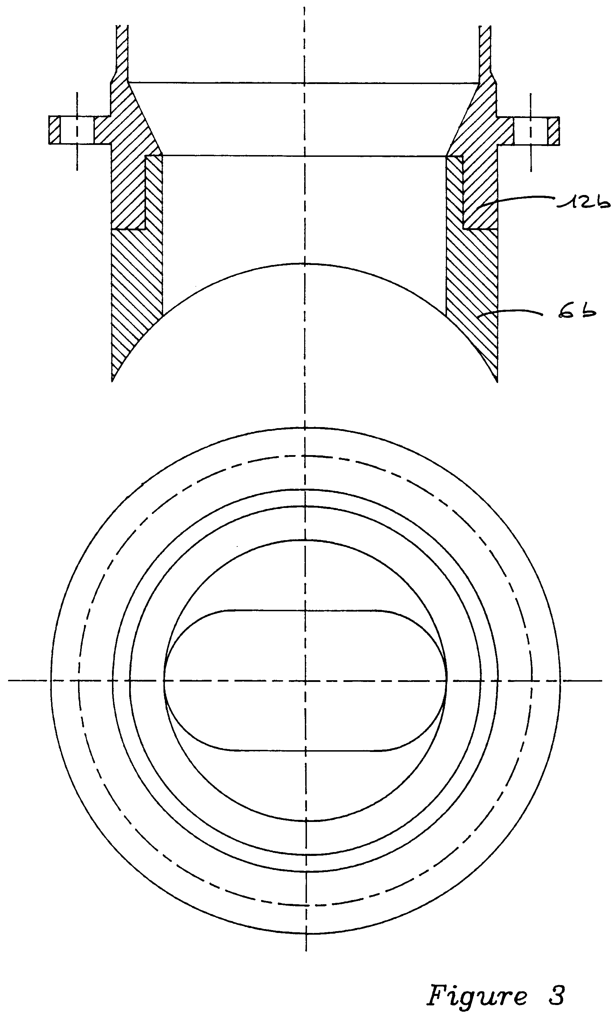

- les figures 3a et 3b représentent, respectivement, une vue de coté et une vue de dessous d'une bague annulaire d'usure selon l'invention.

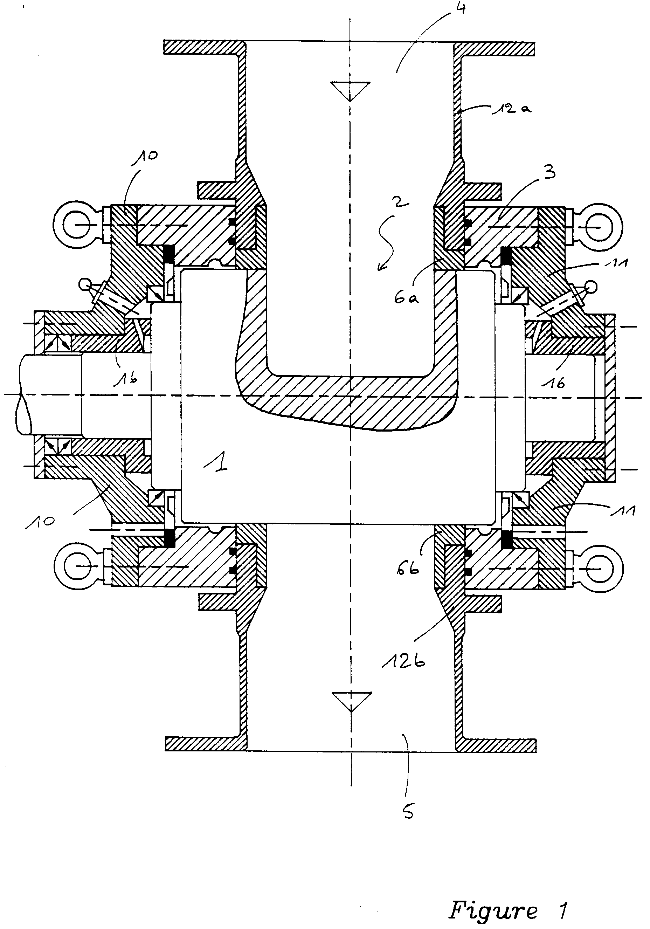

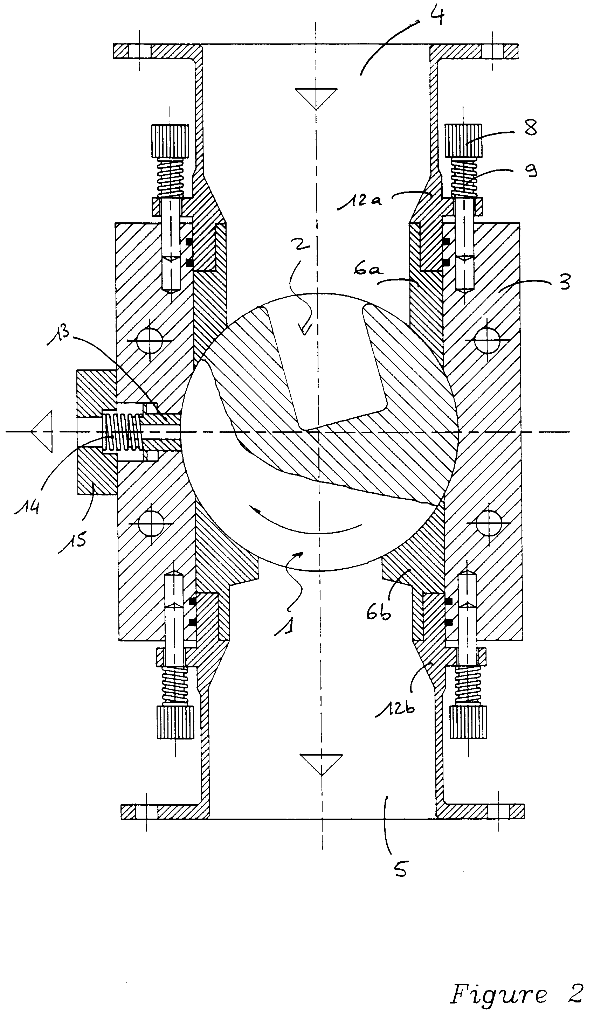

Ainsi, le distributeur rotatif représenté aux figures 1 et 2 comprend un rotor cylindrique 1 qui comporte au moins une alvéole 2. Le rotor peut comporter une à trois alvéoles et peut tourner, de préférence, à une vitesse lente de l'ordre de 5-100 tours/minute.
Le rotor est disposé dans un carter 3 qui recoit deux flasques d'extrémité 10 et 11. Ces flasques sont couplées à des moyens de guidage en rotation 16, qui peuvent être constitués de paliers, ou bagues, autolubrifiants.
Le rotor cylindrique 1 est monté à l'intérieur du carter 3 et est guidé en rotation par rapport audit carter par lesdits paliers autolubrifiants.
La rotation du rotor par rapport au carter peut être complète ou seulement partielle, par exemple pendulaire.
La rotation peut être assurée par un moteur, non représenté sur les figures.

Un manchon d'alimentation 4 et un manchon de déchargement 5 du produit, constitués, chacun, d'une bride d'accouplement 12a ou 12b et d'un élément d'étanchéité 6a ou 6b, sont disposés à travers le carter de manière coulissante, de préférence perpendiculairement à l'axe de rotation du rotor 1, au niveau, respectivement, de l'orifice d'alimentation et de l'orifice de déchargement du produit.
Ces deux manchons sont donc mobiles et leur position peut être réglée et fixée.

Les deux éléments d'étanchéité 6a et 6b, ou bagues d'usure, sont montés en frottement permanent sur le rotor. Leurs axes longitudinaux sont perpendiculaires à l'axe de rotation du rotor, et la force de leur frottement sur le rotor peut être réglée à l'aide de moyens de réglage 8,9, tels qu'une vis et un ressort de compression.

Les matériaux constituant les différents éléments du distributeur selon l'invention peuvent être choisis en fonction de la température d'utilisation dudit distributeur.
Ainsi, selon un mode de réalisation particulier du distributeur selon l'invention, le carter peut être en acier inoxydable, par exemple du type Z 2 CN 18-10, stabilisé en température.
Les deux flasques d'extrémité peuvent être en acier inoxydable.
Les paliers autolubrifiants peuvent être réalisés en polyimide (Kinel), ou en graphite, ou encore en acier nitruré.
Le rotor peut être réalisé en acier inoxydable, par exemple du même type que le carter, et sa surface extérieure peut être stellitée ou nitrisée puis rectifiée.
Les alvéoles du rotor peuvent être téflonnées.

Le carter peut également comprendre des canaux internes, permettant de chauffer ou de refroidir le distributeur rotatif.
L'alésage interne dudit carter, selon l'axe longitudinal de rotation du rotor, est, de préférence, réalisé de manière à permettre un certain jeu, pouvant être variable, de l'ordre de quelques 1/10 mm, ledit jeu étant déterminé en fonction, par exemple de la rotation du rotor, et/ou de la température à laquelle le distributeur est utilisé.
Le carter peut comporter deux alésages perpendiculaires à l'axe longitudinal de rotation du rotor, lesdits alésages recevant les manchons d'alimentation ou de déchargement.
Les deux flasques d'extrémité peuvent être couplées ou fixées, par exemple boulonnées, sur le carter du distributeur.

Selon une variante, le carter peut comporter des orifices d'évent permettant l'équilibrage des pressions lors de l'alimentation ou du déchargement du produit pulvérulent dans les alvéoles du rotor.
Les orifices d'évent sont réalisés dans le carter et se composent d'une bague d'échappement 13, d'un ressort de compression 14 et d'une flasque d'échappement 15.

Les éléments d'étanchéité sont montés à l'intérieur du carter, sur tout le pourtour des alvéoles du rotor, de manière à prendre appui sur le rotor et sur les manchons d'alimentation ou de déchargement et à permettre une étanchéité parfaite entre le rotor, plus précisément les alvéoles, et les manchons d'alimentation et de déchargement vis-à-vis de l'atmosphère extérieure.
Il est donc possible, en utilisant le distributeur selon l'invention, d'isoler, de manière constante ou non, chacun des manchons, de manière alternative.

Selon un mode de réalisation particulier, les éléments d'étanchéité sont constitués de deux bagues d'usure annulaires, dont la face en appui contre le manchon d'alimentation ou de déchargement est plane et dont la face en frottement permanent sur le rotor est de forme semi-cylindrique dans le sens de l'axe de rotation, ou sens longitudinal, du rotor. Les bagues d'usure peuvent être en PTFE blanc non chargé, ou en polyimide.

Selon d'autres modes de réalisation de l'invention, les éléments d'étanchéité peuvent être des bagues, ou anneaux, de section carrée ou ovale.

Les moyens de réglage de la force de frottement des éléments d'étanchéité sur le rotor, en fonction de la pression de service, peuvent se composer d'un ensemble de vis et de ressorts tarés.
Les moyens de réglage sont montés de manière que les éléments d'étanchéité soient mobiles en frottement et que la force appliquée sur le rotor reste constante.

La liaison avec compensation produite par les éléments d'étanchéité assure donc l'étanchéité du distributeur à l'atmosphère extérieure.

## Revendications

1. Distributeur rotatif comprenant:
un carter (3) enfermant une chambre et ayant un orifice d'entrée et un orifice d'émission;
un rotor (1) dans la chambre et comprenant au moins une alvéole (2), ledit rotor étant mobile en rotation par rapport au carter, chaque alvéole étant disposée de manière à être en communication, successivement et après rotation dudit rotor, avec l'orifice d'entrée et puis avec l'orifice d'émission;
un manchon d'entrée (4) disposé dans l'orifice d'entrée de manière coulissante; des moyens de réglage (8,9) de la position du manchon d'entrée (4) dans la chambre, et de la force du frottement sur le rotor; et
un manchon d'émission (5) disposé dans l'orifice d'émission;
caractérisé par le fait que:
ledit manchon d'émission (5) est disposé dans l'orifice d'émission de manière coulissante;
le distributeur comprend des moyens de réglage (8,9) de la position du manchon d'émission (5) dans la chambre, et de la force dudit frottement.
chaque manchon (4, 5) est constitué d'une bride d'accouplement (12a, 12b) et d'un élément d'étanchéité annulaire (6a, 6b), un des éléments (6a) étant monté entre la bride d'accouplement (12a) du manchon d'entrée, le carter et le rotor et l'autre élément (6b) étant monté entre la bride d'accouplement (12b) du manchon d'émission, le carter et le rotor, lesdits éléments d'étanchéité annulaire étant en frottement permanent sur le rotor, les axes longitudinaux desdits éléments étant perpendiculaires à l'axe de rotation du rotor.

2. Distributeur selon la revendication 1, dans lequel chaque moyen de réglage comprend un ensemble de vis et de ressorts tarés, les moyens de réglage étant montés de manière que les éléments d'étanchéité soient mobiles en frottement et que la force appliquée sur le rotor reste constante.

3. Distributeur selon la revendication 1 ou 2, dans lequel chaque élément d'étanchéité est constitué d'une bague d'usure annulaire dont la face en appui contre le manchon est plane et dont la face en frottement permanent sur le rotor est de forme générale semi-cylindrique dans le sens de l'axe de rotation du rotor.

4. Distributeur selon l'une des revendications précédentes, dans lequel le carter comporte des orifices d'évent (13) permettant l'équilibrage des pressions lors de la rotation du rotor.

## Claims

1. A rotary distributor comprising:
a casing (3) enclosing a chamber and having an inlet opening and an outlet opening;
a rotor (1) in the chamber and comprising at least one cell (2), this rotor being movable in rotation with respect to the casing, each cell being disposed so that it is in communication, successively and after the rotation of the rotor, with the inlet opening and then with the outlet opening;
a supply sleeve (4) disposed in the inlet opening in a sliding manner;
means (8, 9) for adjusting the position of the supply sleeve (4) in the chamber and the frictional force on the rotor; and
a discharge sleeve (5) disposed in the outlet opening;
characterised in that:
this discharge sleeve (5) is disposed in a sliding manner in the outlet opening;
the distributor comprises means (8, 9) for adjusting the position of the supply sleeve (5) in the chamber and the force of the friction;
each sleeve (4, 5) is formed by a coupling flange (12a, 12b) and an annular sealing member (6a, 6b), one of the members (6a) being mounted between the coupling flange (12a) of the supply sleeve, the casing and the rotor and the other member (6b) being mounted between the coupling flange (12b) of the supply sleeve, the casing and the rotor, these annular sealing members being in permanent friction on the rotor, the longitudinal axes of these members being perpendicular to the axis of rotation of the rotor.

2. A distributor as claimed in claim 1, in which each adjustment means comprises an assembly of screws and calibrated springs, the adjustment means being mounted such that the sealing members are movable in friction and such that the force applied to the rotor remains constant.

3. A distributor as claimed in claim 1 or 2, in which each sealing member is formed by an annular wear ring, whose surface bearing against the sleeve is plane and whose surface in permanent friction on the rotor is of general semi-cylindrical shape in the direction of the axis of rotation of the rotor.

4. A distributor as claimed in one of the preceding claims, in which the casing comprises vent openings (13) making it possible to balance the pressures during the rotation of the rotor.

## Patentansprüche

1. Zellenradaufgeber, umfassend:
- ein eine Kammer enthaltendes Gehäuse (3) mit einer Eintrittsöffnung und einer Austrittsöffnung,
- einen Rotor (1) in der Kammer, der mindestens eine Zelle (2) aufweist und bezüglich des Gehäuses drehbeweglich ist, wobei jede Zelle so angeordnet ist, daß sie nacheinander nach Drehung dieses Rotors mit der Eintrittsöffnung und dann mit der Austrittsöffnung in Verbindung ist,
- einen in der Eintrittsöffnung verschiebbar angeordneten Eintrittsstutzen (4),
- Einrichtungen (8, 9) zum Einstellen der Stellung des Eintrittsstutzens (4) in der Kammer und der Kraft der Reibung an dem Rotor und
- einen in der Austrittsöffnung angeordnete Austrittsstutzen (5),
dadurch gekennzeichnet,
daß der Aufgeber Einrichtungen (8, 9) zur Einstellung der Stellung des Austrittsstutzens (5) in der Kammer und der Kraft der genannten Reibung besitzt,
daß jeder Stutzen (4, 5) aus einem Kupplungsflansch (12a, 12b) und einem ringförmigen Dichtungselement (6a, 6b) besteht, wobei eines der Elemente (6a) zwischen dem Kupplungsflansch (12a) des Eintrittsstutzens, dem Gehäuse und dem Rotor und das andere Element (6b) zwischen dem Kupplungsflansch (12b) des Austrittsstutzens, dem Gehäuse und dem Rotor angeordnet ist, diese ringförmigen Dichtungselemente ständig an dem Rotor reiben und die Längsachsen dieser Elemente zur Drehachse des Rotors senkrecht sind.

2. Aufgeber nach Anspruch 1, in dem jede Einstelleinrichtung eine aus Schrauben und tarierten Federn bestehende Einheit umfaßt, wobei die Einstelleinrichtungen so angeordnet sind, daß die Dichtungselemente unter Reibung beweglich sind und daß die auf den Rotor ausgeübte Kraft konstant bleibt.

3. Aufgeber nach Anspruch 1 oder 2, in dem jedes Dichtungselement aus einem Verschleißring besteht, dessen auf dem Stutzen aufliegende Auflagefläche eben ist und dessen ständig auf dem Rotor reibende Fläche von in der Richtung der Drehachse des Rotors allgemein halbzylindrischer Form ist.

4. Aufgeber nach einem der vorhergehenden Ansprüche, in dem das Gehäuse Belüftungsöffnungen (13) besitzt, die den Ausgleich der Drücke bei der Drehung des Rotors gestatten.
